# EUROPÄISCHE PATENTSCHRIFT

(11) **EP 2 139 764 B1**
(45) Veröffentlichungstag und Bekanntmachung des Hinweises auf die Patenterteilung: **29.04.2015**
(21) Anmeldenummer: 08733781.2
(22) Anmeldetag: 04.04.2008
(51) Int. Cl.: B64D 11/00

(54) **GEBILDE MIT LUFTKAMMER**
STRUCTURE HAVING AN AIR CHAMBER
STRUCTURE COMPRENANT UNE CHAMBRE À AIR

(30) Priorität: 17.04.2007 CH 631072007
(43) Veröffentlichungstag der Anmeldung: 06.01.2010
(60) Teilanmeldung: 12007414.1
(73) Patentinhaber: Lantal Textiles AG, 4900 Langenthal (CH)
(72) Erfinder: VON BALLMOOS, Roland, CH-8703 Erlenbach (CH); KEREKES, Laszlo, CH-8037 Zürich (CH); RADANOVIC, Dragan, CH-8620 Wetzikon (CH); GÜHMANN, Andreas, CH-8118 Pfaffhausen (CH); SUTER, Iris, CH-5722 Gränichen (CH)
(74) Vertreter: Roshardt, Werner Alfred
(86) Internationale Anmeldenummer: PCT/CH2008/000153
(87) Internationale Veröffentlichungsnummer: WO 2008/124956

(56) Entgegenhaltungen:
- DE-A1- 1 918 240
- FR-A- 2 188 007
- GB-A- 1 465 698
- US-A- 4 255 907
- US-A- 5 813 172
- US-B1- 6 467 221

## Beschreibung

### Technisches Gebiet

Die Erfindung betrifft ein Gebilde, umfassend mindestens zwei separate Luftkammern, welche durch flexibles flächiges Material umschlossen sind und in ihrem Innenraum flexible Stege zur Stabilisierung einer Aussenform der Luftkammer aufweisen.

### Stand der Technik

Die Besatzungen von Luftfahrzeugen müssen auf langen Flügen, wie etwa auf Interkontinentalstrecken, während des Fluges Schlafpausen einlegen. Hierzu bestehen in entsprechenden Luftfahrzeugen Kojen für die Besatzungsmitglieder. Bisher werden zur Fertigung dieser Kojen Wabenstrukturen verwendet, die einzelne Kojen von einander trennen.

Da die Innenausstattung von Flugzeugen erst nach Fertigung der Flugzeugzelle und auf individuellen Wunsch der Kunden erfolgt, ist es hierfür von besonderer Bedeutung, dass eine nachträgliche Ausstattung der Flugzeuge unkompliziert und schnell durchgeführt werden kann. Die dabei verwendeten Werkstoffe müssen für einen ökonomisch profitablen Betrieb der Flugzeuge möglichst leicht sein.

Die Wabenstrukturen haben den Nachteil, dass sie aufwändig zu installieren sind. Die Wände zwischen den einzelnen Kojen müssen durch die Tür des Flugzeugs an die ihnen zugewiesenen Orte gebracht und dort montiert werden.

### Darstellung der Erfindung

Aufgabe der Erfindung ist es, ein dem eingangs genannten technischen Gebiet zugehörendes Gebilde zu schaffen, welches einfach und schnell zu installieren ist.

Die Lösung der Aufgabe ist durch die Merkmale des Anspruchs 1 definiert.

Das Dokument DE1918240 offenbart ein Gebilde mit allen Merkmalen des Oberbegriffs des Anspruchs 1.

Gemäss der Erfindung ist ein Gebilde mit mindestens einer Luftkammer, welche durch flexibles, flächiges Material umschlossen ist und in ihrem Innenraum flexible Stege zur Stabilisierung einer Aussenform der Luftkammern aufweist, wobei die mindestens eine Luftkammer (7) im aufgeblasenen Zustand eine Wandstruktur (4) bildet, dadurch gekennzeichnet, dass das Gebilde eine Bodenschale (2) mit aufrecht stehenden Wandansätzen (3) aufweist, auf welche die Wandstruktur (4) nachträglich aufsetzbar ist.

Insbesondere kann ein Flugzeug ein oder mehrere solcher Gebilde z. B. als Raumunterteilung wie z. B. als Schlaf- oder Aufenthaltskojen aufweisen. Es genügt dabei, dass eine einzige Schicht eines flexiblen, flächigen Materials die Hülle, das heisst die Begrenzung der Luftkammer bildet. Eine aus einem solchen Gebilde bestehende Wandstruktur kann viel schneller und einfacher installiert werden, als die bisher bekannten Wabenstrukturen. Im unaufgeblasenen Zustand kann eine aus einem derartigen Gebilde bestehende Wandstruktur äusserst einfach in den Innenraum des Flugzeugs eingebracht und dort aufgeblasen werden. Im aufgeblasenen Zustand schafft das Gebilde eine Wandstruktur, welche eine stabile und schalldämmende Trennung zwischen einzelnen Plätzen der Kojen bildet. Eine pneumatische Koje, wie sie aus dem beschriebenen Gebilde hergestellt werden kann, ist zudem leichter als die konventionellen Wabenstrukturen.

Bevorzugt wird ein solches Gebilde zur Herstellung einer Koje für Besatzungsmitglieder oder Passagiere, zur Abtrennung einzelner Abteile oder zur kurzfristigen Bereitstellung eines Abteils zum Krankentransport in einem Flugzeug verwendet. Es sind auch auswechselbare Unterteilungen bzw. Trennwände möglich. Ein pneumatisches Gebilde nach der Erfindung kann auch als Liege in einer Koje dienen.

Alternative Anwendungen können im Schiffsbau, bei der Inneneinrichtung von Wohnmobilen oder Eisenbahnen oder in ähnlichen Anwendungsgebieten liegen.

Bevorzugt bilden die Luftkammern im aufgeblasenen Zustand eine selbst tragende Raumstruktur mit Seitenwänden und Decke. Eine eigene Deckenkonstruktion auf erfindungsgemässe Weise ermöglicht die Herstellung einer vollständig abgeschlossenen Kojeneinheit. Eine solche Koje ist sehr flexibel in der Fluggastzelle eines Flugzeugs einsetzbar und braucht nicht starr mit dem Innenraum des Flugzeugs verbunden zu sein. Zudem können solche Kojen auch als autarke Einheiten ausgebildet sein, welche nicht besonders an die jeweiligen Raumverhältnisse der Fluggastzelle angepasst sind. Zusätzlich zu der Ausführung der Decke als erfindungsgemässe Luftkammerstruktur weist die Wandstruktur einer solchen Koje bevorzugt vier Luftkammern auf, welche die Wandstruktur in Form einer Rückwand, einer Frontwand und zwei Seitenwänden bilden. Die Frontwand ist dabei bevorzugt mit einer Einstiegöffnung versehen.

Alternativ ist eine Koje denkbar, deren Seitenwände durch die erfindungsgemässe Wandstruktur dargestellt werden, deren Decke jedoch nicht auf diese Struktur zurückgreift, sondern beispielsweise durch die Decke der Fluggastzelle gebildet wird.

Weiter umfasst die Decke bevorzugt mindestens eine weitere Luftkammer. Die Verwendung von Luftkammern hat eine besonders günstige schalldämmende Wirkung und eignet sich daher zur Konstruktion von Kojen.

Alternativ sind andere Deckenelemente denkbar, wie das Spannen einer einfachen oder mehrlagigen Folie oder eine auf die Wandstruktur aufgebrachte steife Ebene, beispielsweise eine Platte. Insbesondere können auch die konventionell verwendeten Wabenstrukturen als Deckenelemente in Verbindung mit den erfindungsgemässen Wandstrukturen Verwendung finden.

Weiter bevorzugt wird eine Ausführungsform, die dadurch gekennzeichnet ist, dass die mindestens eine Luftkammer, welche die Decke bildet, mit mindestens einer Naht mit der bzw. den Luftkammern verbunden ist, welche die Wandstruktur bilden. Dieses Zusammenfügen der Decke mit der Wandstruktur führt vorteilhaft dazu, dass die Übergänge zwischen dem Deckenteil und den einzelnen Wandteilen fest und schalldämmend ausgeführt sind. Eine durchgängige Naht bietet durch die feste innere Verbindung zwischen Wandstruktur und Decke eine hohe Stabilität der Gesamtkonstruktion. Die Naht kann dabei neben einer Ausführung als Schweissnaht auch beispielsweise durch ein wieder verschliessbares Verbindungsmittel, wie einem Reissverschluss (Zipper), Klettstreifen oder ähnliche Verbindungsmitteln, realisiert werden. Insbesondere kann jede der Luftkammern mit entlang ihres Randes verlaufenden Laschen ausgestattet sein, die mit den Laschen der jeweils angrenzenden Luftkammern beispielsweise mittels eines Reissverschlusses verbunden werden können. Bei der Verwendung von Klettverbindungen kann auch auf Laschenstreifen verzichtet werden.

Es können natürlich auch an beliebigen Stellen einer erfindungsgemässen Wandstruktur Verbindungsmittel (Druckknöpfe, Reissverschlüsse, Klettstreifen etc.) vorgesehen sein, um zwei Gebildeteile zu verbinden.

Alternativ kann die Decke auch punktuell mit der Wandstruktur verbunden werden. Auf diese Weise ist eine feste Verbindung zwischen der Wandstruktur und der Decke gegeben, wobei sich die Zwischenräume zwischen den punktuellen Verbindungen negativ auf die Schalldämmung auswirken.

In einer weiteren bevorzugten Ausführungsform bestehen die Luftkammern aus einem transluzenten Material. Ein derartiges Material erlaubt es einem beispielsweise von unten in die Luftkammern eingekoppelten Lichtstrahl oder -bündel, die Luftkammer zu durchstrahlen. Dabei kann an der jeweiligen Begrenzung der Luftkammer Licht durch Streuung an der transluzenten Oberfläche der Luftkammer in deren Umgebung abgestrahlt werden. Auf diese Weise kann die direkte Umgebung der Luftkammer sehr elegant durch indirektes, gestreutes Licht beleuchtet werden. Die Stege verlaufen in dieser bevorzugten Ausführungsform parallel zu einander und im Wesentlichen in vertikaler Richtung, sodass Licht, welches von unten durch die Luftkammer strahlt, nicht durch die Stege weiter abgeschwächt wird.

Alternativ kann auf die transluzente Ausgestaltung der Wandstruktur verzichtet werden. Es kann auch beispielsweise aus statischen Gründen vorteilhaft sein, die Stege in den Luftkammern horizontal, diagonal oder als allgemeine Mischung aus vertikaler und horizontaler Ausrichtung anzuordnen.

Bevorzugt stossen die Luftkammern, welche die Wandstruktur bilden mit ihren oberen Stirnseiten an eine Unterseite der mindestens einen weiteren Luftkammer, welche die Decke bildet, sodass Licht in die Decke eingekoppelt werden kann. Eine derartige Ausführungsform ermöglicht eine konstruktiv einfach ausgeführte Beleuchtung der Koje. Ein durch die Wandstruktur in die Decke geleiteter Lichtstrahl oder ein Lichtbündel kann in der Decke weitergeleitet und aus dieser, beispielsweise durch Streuung, ausgekoppelt werden. Der Lichtweg ist also auf elegante und technisch unkomplizierte Weise in der Wandstruktur steuerbar.

Die Wandstruktur und Decke können auch über unterschiedliche Leuchtmittel angesteuert werden, sodass auch eine selektive Beleuchtung der Koje, beispielsweise in Form einzelner erleuchteter Luftkammern, ermöglicht wird. Somit fällt die Notwendigkeit einer komplizierten Elektroinstallation zur Beleuchtung der Koje weg, da das eigentliche Leuchtmittel beispielsweise im Boden der Fluggastkabine oder in einer Bodenschale eingelassen sein kann und nur das von diesem Leuchtmittel emittierte Licht auf die vorgenannte Weise in die Koje geleitet werden muss, um die Koje vollständig mit Licht zu versorgen.

Alternativ kann auf die direkte Leitung von Licht innerhalb der Wandstruktur verzichtet werden. Um eine Beleuchtung einer erfindungsgemässen Koje zu ermöglichen, bieten sich einerseits eine Verkabelung der Wandstruktur und der sich an diese anschliessenden Decke an. Andererseits kann auch vom Deckenbereich der Fluggastkabine eine direkte Stromversorgung eines Leuchtmittels im Innern der Koje realisiert werden. Auch ein transparenter Teil der Decke in Verbindung mit einem sich über dem transparenten Teil befindlichen Leuchtmittel kann eine ausreichende Versorgung der Koje mit Licht leisten. Daneben besteht auch die Möglichkeit, eine Leuchte im Innern der Koje zu installieren, die bodenseitig mit Strom versorgt wird. Dies gilt insbesondere auch für die Verwendung einer Bodenschale mit einer bereits vormontierten Leuchte.

Bevorzugt werden die Luftkammern der Wandstruktur und der Decke mit einem relativen Druck von < 150 mbar, insbesondere 50-90 mbar, beaufschlagt. Unter relativem Druck ist ein Überdruck gegenüber dem Umgebungsdruck, insbesondere ein Überdruck gegenüber dem in der Fluggastzelle herrschenden und durch die flugzeugseitigen Kompressoren der Druckkabine festgelegten Luftdruck zu verstehen. Bei einem relativen Druck dieser Grössenordnung ist die Schalldämmungswirkung der Wandstruktur bzw. der Decke besonders effizient. Bei Einsatz der Erfindung in Luftfahrzeugen wird der relative Druck besonders bevorzugt durch eine Kopplung an das luftfahrzeugseitige Kompressorsystem gegeben.

Vorzugsweise ist eine Möglichkeit zur Regelung des Drucks in der Wandstruktur vorgesehen. Die Regelung kann mit einem Drosselventil lokal an dem Gebilde (z. B. an der Koje) ermöglicht werden, um den vom Kompressorsystem des Flugzeugs zur Verfügung gestellten Druck manuell oder automatisch einzustellen. Die Druckregelung kann aber auch durch eine z. B. zentral im Cockpit oder an einem anderen geeigneten Ort angeordnete Regelschaltung für alle vorhandenen Wandstrukturen erfolgen.

Bei der Verwendung höherer relativer Drücke, kann eine höhere Stabilität der Wandstruktur erreicht werden. Sie hat jedoch den Nachteil, dass die Schalldämmung einer hier beschriebenen Wandstruktur bei relativen Drücken, welche viel höher als 90 mbar liegen (nämlich über 150 mbar), schnell abnimmt. Mit einem viel höheren Druck ist hier ein Druck gemeint, der sich um mindestens eine Grössenordnung von seinem Referenzdruck unterscheidet.

Bei der Verwendung des Gebildes als Koje kann bevorzugt eine pneumatische Liege in der Koje vorgesehen sein. Vorteilhaft weist eine pneumatische Liege eine deutlich längere Lebensdauer auf als üblicherweise verwendete Schaumstoffliegen. Die pneumatische Liege kann mit Vorteil mit dem gleichen Druckluftsystem verbunden sein, welches auch die Wandstruktur der Unterteilung mit Druckluft speist.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Seitenansicht einer Schlafkoje, umfassend ein erfindungsgemässes Gebilde
- Fig. 2: Querschnitt einer Schlafkoje, umfassend ein erfindungsgemässes Gebilde
- Fig. 3: Draufsicht auf eine Luftkammer mit Befestigungslaschen
- Fig. 4: Querschnitt einer Verbindung zwischen einer Luftkammer einer Wandstruktur und einer Luftkammer einer Decke
- Fig. 5: Schematische Darstellung eines Reissverschlusses, welcher die Laschen benachbarter Luftkammern miteinander verbindet

Grundsätzlich sind in den Figuren gleiche Teile mit gleichen Bezugszeichen versehen.

### Wege zur Ausführung der Erfindung

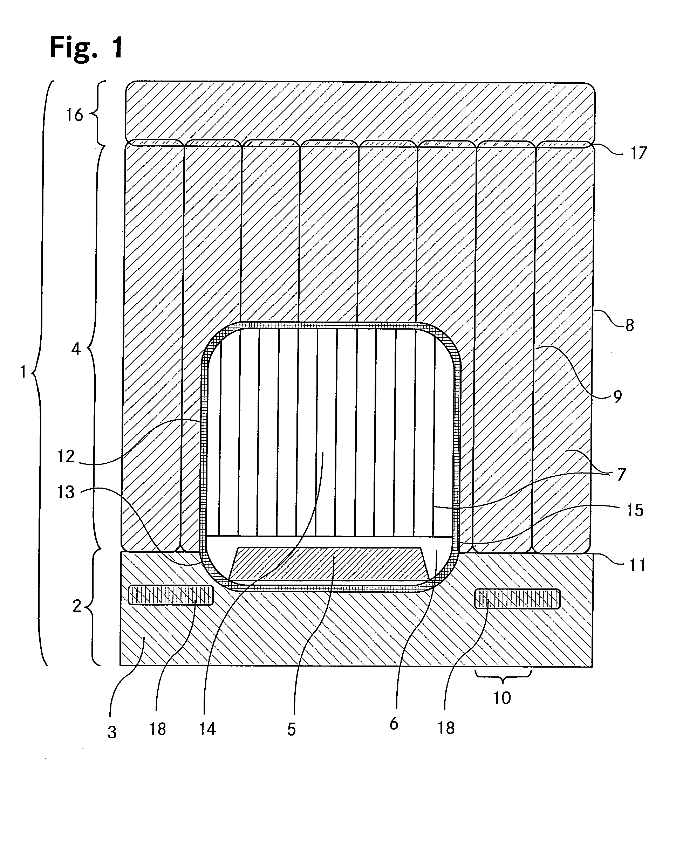

Die in Figur 1 dargestellte Schlafkoje 1 umfasst eine Bodenschale 2 mit aufrecht stehenden Wandansätzen 3, auf welche eine Wandstruktur 4 aufgesetzt ist. Die Bodenschale 2 ist im Wesentlichen von rechteckiger Grundfläche, aus festem Material gefertigt und allgemein zur Installation auf Bodenflächen geeignet. In ihr befindet sich der eigentliche Schlafplatz in Form einer Liegefläche 5 mit einer diese umgebenden Polsterung 6. Die Polsterung 6 ist ihrerseits an die äussere Form der Bodenschale 2 angepasst und bildet somit eine Art Wanne in deren Tiefpunkt sich die Liege 5 befindet. Beim Einsatz in Luftfahrzeugen ist eine solche wannenförmige Konstruktion der Bodenschale 2 von Vorteil, weil mögliche, abrupte Lageänderungen des Luftfahrzeugs beispielsweise durch Turbulenzen eine in der Schlafkoje liegende Person nur schwer aus dieser heraus werfen können.

An die Bodenschale 2 mit ihren aufrecht stehenden Wandansätzen 3 schliesst sich eine Wandstruktur 4 an. Die Wandstruktur 4 wird durch vier Luftkammern 7 gebildet, welche durch eine Folie 8 umschlossen sind und in ihrem Innenraum flexible Stege 9 zur Stabilisierung ihrer Aussenform aufweisen. Die flexiblen Stege 9 sind zumindest teilweise luftdurchlässig ausgeführt, sodass ein Luftaustausch zwischen den einzelnen Parzellen der Luftkammern möglich ist. Die Stege 9 halten die Folie 8 der Wandstruktur in einer vordefinierten Form. Der gegenseitige Abstand 10 der Stege 9 ist dabei bevorzugt proportional zur Stärke der Wandstruktur 4. Bevorzugt ändert sich der Abstand 10 mit variierender Wandstärke. Typischerweise ist der gegenseitige Abstand der Stege kleiner als die am Ort des Steges vorhandene Wanddicke.

Die Stege 9 der Wandstruktur 4 sind vertikal ausgerichtet. Die Wandstruktur 4 ist dabei mit der Bodenschale 2 verbunden, wobei die Verbindung 11 durch einen Reissverschluss gebildet wird.

Die Form der Wandstruktur 4 wird im Wesentlichen durch die Anordnung und Form der einzelnen Luftkammern 7 bestimmt. Je kleiner die einzelnen Luftkammern 7 sind, desto komplexere Formelemente können durch das Zusammensetzen dieser Luftkammern 7 hergestellt werden.

Die Bodenschale 2 und auch die Wandstruktur 4 weisen je eine Aussparung 12, 13 an ihrem Rand auf. Die beiden Aussparungen 12, 13 sind so dimensioniert, dass sie im zusammengesetzten Zustand eine Einstiegsöffnung 14 für die Schlafkoje 1 bilden. Diese Einstiegsöffnung 14 ist von einem Rahmen 15 umrandet, der die Öffnung 14 stabilisiert und Befestigungsflächen beispielsweise für einen Vorhang oder ähnliche Raumtrennelemente bietet. Auf diese Weise kann der Innenraum der Schlafkoje 1 nach aussen blickdicht abgeschlossen werden.

An die Wandstruktur 4 schliesst sich eine ebenfalls aus einer Vielzahl von Luftkammern bestehende Decke 16 an, welche über Schweissnähte 17 mit der Wandstruktur 4 verbunden ist. Durch diese feste Verbindung zwischen Decke 16 und Wandstruktur 4 erhält die gesamte Konstruktion der Schlafkoje 1 und insbesondere die Wandstruktur 4 eine erhöhte Festigkeit. Die Decke 16 ist dabei aus dem gleichen Folienmaterial gefertigt wie die Wandstruktur 4.

Die in Figur 1 dargestellte Ausführungsform zeichnet sich zusätzlich dadurch aus, dass in der Bodenschale 2 Leuchtmittel 18 angebracht sind, deren Licht durch die untere Stirnseite der Wandstruktur 4 eingekoppelt und an der oberen Stirnseite der Wandstruktur 4 in die Decke 16 eingekoppelt wird. Über die Folie der Wandstruktur 4 bzw. Decke 16 wird das Licht der Leuchtmittel 18 im Wesentlichen gleichmässig in das Innere der Schlafkoje 1 geleitet, sodass die Wandstruktur 4 und Decke 16 effektiv selbst als Leuchte fungieren.

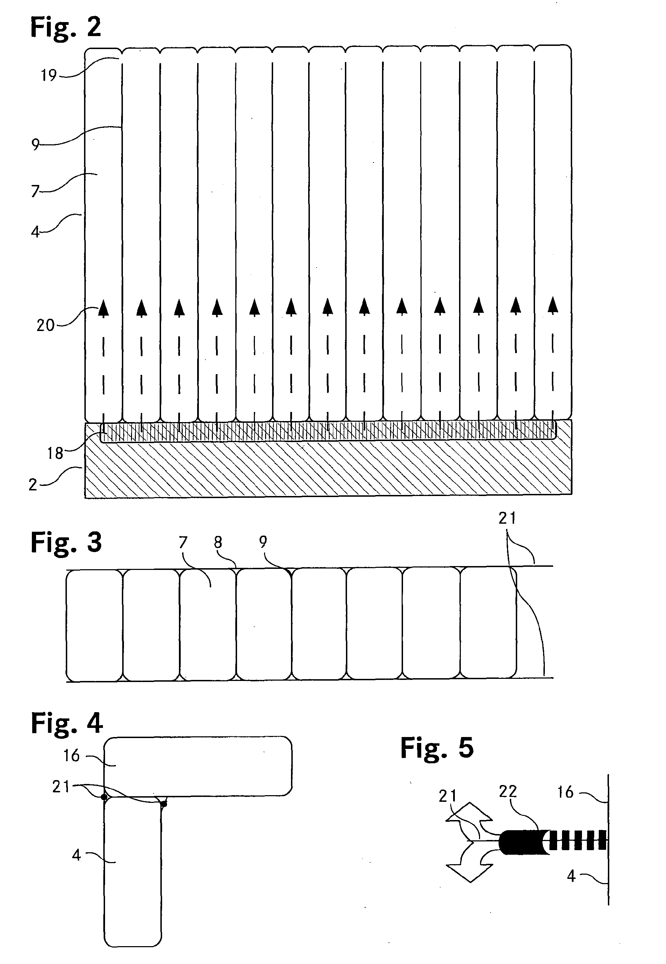

Figur 2 zeigt eine Bodenschale 2, in der Leuchtmittel 18 aufgenommen sind. Das Licht 20 der Leuchtmittel 18 wird in die transluzenten Luftkammern 7 eingekoppelt und durch diese hindurchgeleitet. Da die Stege 9 im Wesentlichen vertikal verlaufen, kann das Licht vom unteren Teil der Wandstruktur 4 bis zu deren oberen Teil hindurch propagieren, ohne dabei nennenswerte Verluste zu erleiden. Die Stege 9, welche die Luftkammern 7 bilden, sind zumindest teilweise luftdurchlässig. In dem Ausführungsbeispiel aus Figur 2 sind Öffnungen 19 in den Stegen eingearbeitet, welche einen Luftaustausch zwischen allen Luftkammern 7 ermöglichen.

Figur 3 zeigt eine Draufsicht auf eine Luftkammer 7 mit in ihr enthaltenen Stegen 9. Die Luftkammer 7 ist von einer Folie 8 umschlossen. Weiter sind an der Folie 8 auf jeder Seite der Luftkammer 7 Laschen 21 angebracht, welche der Verbindung zwischen zwei Luftkammern dienen. An den Laschen 21 können beispielsweise Reissverschlüsse (Zipper) Schweissnähte oder Klettverschlüsse angebracht werden, um mehrere Luftkammern zu einer Wandstruktur zu verbinden.

Figur 4 zeigt einen Querschnitt einer Verbindung zwischen einer Luftkammer einer Wandstruktur 4 und einer Luftkammer einer Decke 16. Zwischen den Luftkammern ist auf jeder Seite der Luftkammern eine Lasche 21 angebracht, welche die Luftkammern zusammenhalten. Die Decke 16 ist derart auf die Wandstruktur 4 aufgebracht, dass sie mit einer Unterseite auf einer Stirnseite der Wandstruktur 4 aufliegt. Auf diese Weise kann Licht aus der Wandstruktur 4 in die Decke 16 eingekoppelt werden.

Die Figur 5 zeigt eine schematische Darstellung eines Reissverschlusses 22, welcher die Laschen 21 zweier benachbarter Luftkammern, beispielsweise einer Luftkammer der Wandstruktur 4 und eine Luftkammer einer Decke 16 miteinander verbindet. Alternativ zur Verwendung eines Reissverschlusses können die Laschen beispielsweise durch Schweissnähte oder Klettverschlüsse miteinander verbunden werden.

Die in Figur 1 dargestellte, auf der Bodenschale 2 aufgesetzte Wandstruktur 4 kann mit der Bodenschale 2 auch mit anderen Befestigungsmitteln, wie etwa einer Schweissnaht oder einem Klettverschluss verbunden werden. Analog gilt für die Verbindung zwischen Wandstruktur 4 und Decke 16, dass diese neben einer Realisierung als Schweissnaht auch als Reissverschluss oder Klettverschluss ausgeführt sein kann.

Die Beleuchtung der Schlafkoje 1 kann alternativ zur Beleuchtung über in die Wandstruktur 4 eingekoppeltes Licht auch durch konventionelle, direkte Beleuchtung erfolgen, beispielsweise durch eine in der Bodenschale 2 installierte Lampe.

Zusammenfassend ist festzustellen, dass durch die Erfindung ein aufblasbares Gebilde mit Luftkammern zur Verfügung gestellt wird, welches eine schnelle und unkomplizierte sowie leichte Konstruktion einer selbsttragenden Raumstruktur, insbesondere zum Einsatz in Luftfahrzeugen wie beispielsweise Grossraumflugzeugen, ermöglicht. Das erfindungsgemässe Gebilde erlaubt eine gute Schalldämmung sowie eine unkomplizierte Lichtleitung in seinem Innern.

## Patentansprüche

1. Gebilde umfassend mindestens eine Luftkammer (7), welche durch flexibles flächiges Material (8) umschlossen ist und in ihrem Innenraum flexible Stege (9) zur Stabilisierung einer Aussenform der Luftkammer (7) aufweist, wobei die mindestens eine Luftkammer (7) im aufgeblasenen Zustand eine Wandstruktur (4) bildet, **dadurch gekennzeichnet, dass** das Gebilde eine Bodenschale (2) mit aufrecht stehenden Wandansätzen (3) aufweist, auf welche die Wandstruktur (4) nachträglich aufsetzbar ist.

2. Gebilde nach Anspruch 1, **dadurch gekennzeichnet, dass** mindestens zwei, insbesondere mindestens vier separate, plattenförmige Luftkammern vorgesehen sind.

3. Gebilde nach Anspruch 2, **dadurch gekennzeichnet, dass** die Luftkammern (7) im aufgeblasenen Zustand eine selbst tragende Raumstruktur mit Seitenwänden (4) und Decke (16) bilden.

4. Gebilde nach Anspruch 3, **dadurch gekennzeichnet, dass** die Decke (16) mindestens eine weitere Luftkammer (7) umfasst.

5. Gebilde nach Anspruch 4, **dadurch gekennzeichnet, dass** die mindestens eine weitere Luftkammer (7), welche die Decke (16) bildet, mit mindestens einer Naht (17) mit der bzw. den Luftkammern (7) verbunden ist, welche die Wandstruktur (4) bilden.

6. Gebilde nach einem der Ansprüche 1 bis 5, **dadurch gekennzeichnet, dass** die Luftkammern (7) aus einem transluzenten Material bestehen, und dass die Stege (9) in den Wandstrukturen (4) im Wesentlichen in vertikaler Richtung verlaufen.

7. Gebilde nach Anspruch 4 und 6, **dadurch gekennzeichnet, dass** die Luftkammern (7), welche die Wandstruktur (4) bilden mit ihren oberen Stirnseiten an eine Unterseite der weiteren Luftkammer (7), welche die Decke (16) bildet, stossen, derart dass ein durch die Wandstruktur in die Decke geleiteter Lichtstrahl oder ein Lichtbündel in der Decke weitergeleitet wird.

8. Gebilde nach einem der Ansprüche 1 bis 7, **dadurch gekennzeichnet, dass** es im aufgeblasenen Zustand eine Koje (1) für ein Flugzeug bildet.

9. Gebilde nach einem der Ansprüche 1 bis 8, **dadurch gekennzeichnet, dass** die mindestens eine Luftkammer (7) mit einem Druck von höchstens 150 mbar, insbesondere 50-90 mbar beaufschlagt ist.

10. Flugzeug mit mindestens einem eingebauten Gebilde nach einem der Ansprüche 1 bis 9 als Unterteilung, insbesondere als Koje (1).

## Claims

1. Formed body comprising at least one air chamber (7) which is enclosed by flexible sheet-like material (8) and which has, in its internal space, flexible webs (9) for stabilizing an outer shape of the air chamber (7), wherein the at least one air chamber (7) forms, in the inflated state, a wall structure (4), **characterized in that** the formed body has a bottom shell (2) with upright wall lugs (3) onto which the wall structure (4) can subsequently be placed.

2. Formed body according to Claim 1, **characterised in that** at least two, in particular at least four separate, plate-shaped air chambers are provided.

3. Formed body according to Claim 2, **characterized in that** the air chambers (7) form, in the inflated state, a self-supporting space structure with sidewalls (4) and a ceiling (16).

4. Formed body according to Claim 3, **characterized in that** the ceiling (16) comprises at least one further air chamber (7).

5. Formed body according to Claim 4, **characterized in that** the at least one further air chamber (7) forming the ceiling (16) is connected to the one or more air chambers (7) forming the wall structure (4) by at least one seam (17).

6. Formed body according to one of Claims 1 to 5, **characterized in that** the air chambers (7) consist of a translucent material, and **in that** the webs (9) run substantially vertically in the wall structures (4).

7. Formed body according to Claims 4 and 6, **characterized in that** the upper end faces of the air chambers (7) forming the wall structure (4) abut against an underside of the further air chamber (7) forming the ceiling (16), such that a beam or shaft of light introduced into the ceiling through the wall structure propagates in the ceiling.

8. Formed body according to one of Claims 1 to 7, **characterized in that** it forms, in the inflated state, a berth (1) for an aircraft.

9. Formed body according to one of Claims 1 to 8, **characterised in that** a pressure of at most 150 mbar, in particular 50-90 mbar, prevails in the at least one air chamber (7).

10. Aircraft having at least one integrated formed body according to one of Claims 1 to 9 as a partition, in particular as a berth (l).

## Revendications

1. Structure comprenant au moins une chambre à air (7), qui est entourée par un matériau plat flexible (8) et qui présente, dans son espace intérieur, des nervures flexibles (9) pour stabiliser une forme extérieure de la chambre à air (7), l'au moins une chambre à air (7) formant une structure de paroi (4) dans l'état gonflé, **caractérisée en ce que** la structure présente une coque de fond (2) avec des débuts de paroi verticaux (3) sur lesquels la structure de paroi (4) peut être posée ultérieurement.

2. Structure selon la revendication 1, **caractérisée en ce qu'**au moins deux, en particulier au moins quatre, chambres à air séparées en forme de plaque sont prévues.

3. Structure selon la revendication 2, **caractérisée en ce que** les chambres à air (7), dans l'état gonflé, forment une structure spatiale autoportante avec des parois latérales (4) et un plafond (16).

4. Structure selon la revendication 3, **caractérisée en ce que** le plafond (16) comprend au moins une chambre à air supplémentaire (7).

5. Structure selon la revendication 4, **caractérisée en ce que** l'au moins une chambre à air supplémentaire (7), qui forme le plafond (16), est connectée par au moins une couture (17) à la ou aux chambres à air (7) qui forment la structure de paroi (4).

6. Structure selon l'une quelconque des revendications 1 à 5, **caractérisée en ce que** les chambres à air (7) se composent d'un matériau translucide et **en ce que** les nervures (9) dans les structures de paroi (4) s'étendent essentiellement dans la direction verticale.

7. Structure selon les revendications 4 et 6, **caractérisée en ce que** les chambres à air (7) qui forment la structure de paroi (4) viennent en aboutement avec leurs côtés frontaux supérieurs contre un côté inférieur de la chambre à air supplémentaire (7) qui forme le plafond (16) de telle sorte qu'un rai ou un faisceau de lumière guidé à travers la structure de paroi dans le plafond soit transféré dans le plafond.

8. Structure selon l'une quelconque des revendications 1 à 7, **caractérisée en ce qu'**elle constitue, dans l'état gonflé, une couchette (1) pour un avion.

9. Structure selon l'une quelconque des revendications 1 à 8, **caractérisée en ce que** l'au moins une chambre à air (7) est sollicitée avec une pression de 150 mbar au maximum, en particulier de 50 à 90 mbar.

10. Avion comprenant au moins une structure incorporée selon l'une quelconque des revendications 1 à 9, en tant que subdivision, en particulier en tant que couchette (1).
